# FASCICULE DE BREVET EUROPEEN

(11) **EP 0 527 672 B1**
(45) Date de publication et mention de la délivrance du brevet: **28.12.1994**
(21) Numéro de dépôt: 92402230.4
(22) Date de dépôt: 05.08.1992
(51) Int. Cl.: B64D 27/26

(54) **Structure d'accrochage arrière d'un turboréacteur**
Sicherungsvorrichtung für die Hinteraufhängung eines Turbinetriebwerkes
Rear suspension device for an engine turbine unit

(30) Priorité: 14.08.1991 FR 9110323
(43) Date de publication de la demande: 17.02.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Pachomoff, Guy Robert, F-91100 Corbeil Essonnes (FR)

(56) Documents cités:
- WO-A-85/02596
- FR-A- 2 599 708
- GB-A- 1 236 917
- GB-A- 2 049 817
- US-A- 4 634 081

## Description

L'invention concerne une structure d'accrochage arrière, par laquelle un turboréacteur peut être suspendu au mât placé sous l'aile d'un avion.

L'accrochage d'un turboréacteur sous l'aile d'un avion s'effectue par l'intermédiaire d'un mât conçu pour assurer la transmission mécanique des efforts entre le turboréacteur et la structure de l'avion. Le turboréacteur est suspendu au mât en deux points définissant une suspension avant et une suspension arrière. La transmission des efforts de poussée s'effectue quant à elle au travers de barres de reprise de poussée inclinées, situées de part et d'autre du turboréacteur.

La suspension arrière comprend habituellement au moins trois oreilles ou chapes d'accrochage extérieures qui sont réalisées d'un seul tenant à la partie supérieure du carter d'échappement du turboréacteur. Ces oreilles permettent de fixer le carter d'échappement aux extrémités inférieures de trois biellettes de suspension dont les extrémités supérieures sont montées sur une structure d'accrochage sensiblement en arc de cercle, fixée directement sous le mât servant à supporter le turboréacteur.

Habituellement, la structure d'accrochage arrière en arc de cercle comprend une ferrure en une seule pièce sur laquelle chaque biellette est accrochée par un axe de suspension horizontal. Cette ferrure est elle même fixée sous le mât par des vis qui sont en prise sur deux axes de suspension horizontaux traversant la ferrure.

Dans le document FR 2 599 708 , on a envisagé la rupture accidentelle d'une des biellettes par lesquelles le turboréacteur est suspendu à la ferrure de la structure d'accrochage arrière, en indiquant qu'une telle rupture pouvait conduire au décrochage total du moteur ou, au moins, à endommager les barres de reprise de poussée inclinées qui sont situées de part et d'autre du turboréacteur. Pour remédier à cet inconvénient, il a été proposé d'adjoindre aux trois biellettes de suspension utilisées habituellement une quatrième biellette, dite de sécurité, qui ne remplit une fonction mécanique de supportage que dans le cas où l'une des trois biellettes de suspension est rompue.

Si le document FR-A-2 599 708 propose une solution satisfaisante au problème posé par la rupture d'une des trois biellettes de suspension par lesquelles le turboréacteur est accroché à la ferrure fixée sous le mât, il ne s'intéresse pas au cas où la défaillance de la suspension arrière du turboréacteur résulterait d'une rupture de la ferrure en une seule pièce utilisée habituellement. Cependant, si une telle rupture apparaît comme encore plus improbable que la rupture de l'une des biellettes de suspension, le risque pour qu'elle conduise au décrochage total du moteur semble plus important que dans le cas d'une rupture de biellette.

L'invention a précisément pour objet une structure d'accrochage d'un type nouveau, dans laquelle le décrochage total du moteur est évité, même dans le cas où une rupture mécanique se produirait au niveau de la ferrure.

Conformément à l'invention, ce résultat est obtenu au moyen d' une structure d'accrochage arrière d'un turboréacteur à un mât porté par un avion, comprenant une ferrure prévue pour être fixée sous le mât par au moins deux premiers axes de suspension et pour être reliée à des biellettes de suspension du carter d'échappement par au moins trois deuxièmes axes de suspension, la ferrure comprenant au moins deux parties traversées toutes deux par les premiers et deuxièmes axes de suspension, caractérisée par le fait que lesdites au moins deux parties ajustées l'une dans l'autre, chacune desdites parties étant dimensionnée afin de pouvoir assurer en totalité la reprise des efforts transmis entre le carter et le mât.

Etant donné que les deux parties de la ferrure sont aptes à assurer, indépendamment l'une de l'autre, la reprise totale des efforts qui sont transmis au travers de la suspension arrière, la tenue mécanique de cette dernière est assurée même en cas de rupture de l'une de ces deux parties. Il est donc possible de déceler l'anomalie et de procéder aux réparations lors d'un contrôle ultérieur sans que cela n'entraîne de risque d'aucune sorte pour l'avion en vol.

Avantageusement, les deux parties de la ferrure sont en outre reliées entre elles par des moyens d'assemblage tels que des boulons traversant ces deux parties.

Selon un mode de réalisation préféré de l'invention, les deux parties de la ferrure comprennent une partie intérieure, à section en forme de U renversé, dans laquelle pénètrent les biellettes de suspension, et une partie extérieure, à section en forme de U renversé chevauchant la partie intérieure, les deuxièmes axes de suspension traversant la partie intérieure et la partie extérieure de part et d'autre des biellettes de suspension.

On décrira à présent un mode de réalisation préféré de l'invention, en se référant aux dessins annexés, dans lesquels :
- la figure 1 est une vue de côté, en coupe partielle, illustrant de façon très schématique la suspension d'un turboréacteur sous une aile d'avion ;
- la figure 2 est une section prise selon la ligne II-II de la figure 1, illustrant à plus grande échelle la suspension arrière du turboréacteur ;
- la figure 3 est une vue en coupe comparable à celle de la figure 2, illustrant encore à plus grande échelle la suspension arrière ;
- la figure 4 est une vue dessus de la structure illustrée sur la figure 3 ; et
- la figure 5 est une vue de côté de cette même structure.

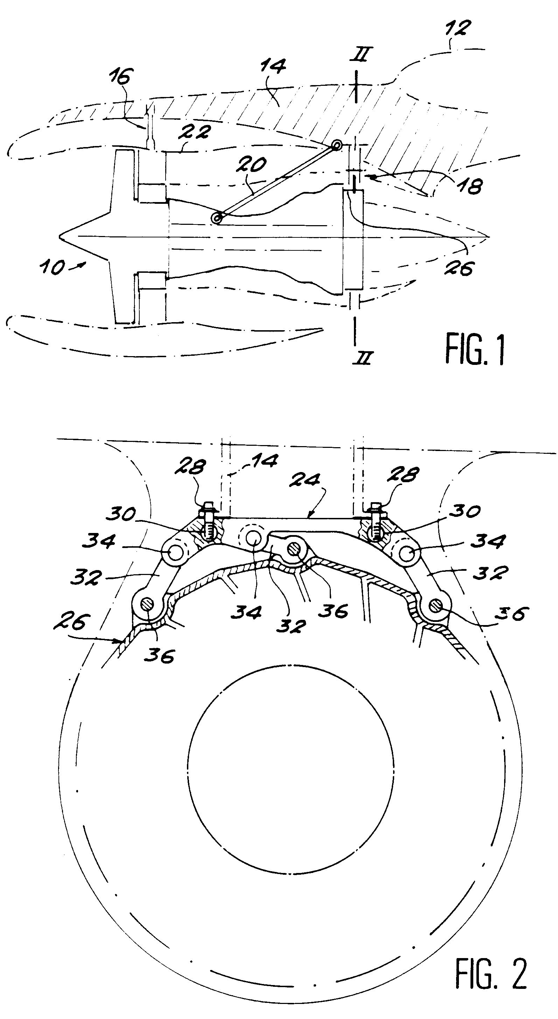

Sur la figure 1, on a représenté la suspension d'un turboréacteur 10 sous une aile d'avion 12 dont seule la partie avant est visible. Cette suspension est réalisée par l'intermédiaire d'un mât 14 qui fait saillie vers l'avant en dessous du bord d'attaque de l'aile 12.

Le turboréacteur 10 est suspendu au mât 14 par une structure de suspension avant 16 et par une structure de suspension arrière 18 autorisant le démontage du turboréacteur lorsque cela est nécessaire. La liaison entre le turboréacteur 10 et le mât 14 est complétée par des barres de reprise de poussée 20, situées de part et d'autre du turboréacteur et au travers desquelles l'effort de poussée exercé par le turboréacteur est transmis par le mât 14 à l'aile 12 de l'avion.

La structure de suspension avant 16 du turboréacteur 10 comprend habituellement des biellettes de suspension (non représentées), accrochées à la partie avant du mât 14 et dont les extrémités inférieures sont fixées sur le carter 22 du turboréacteur.

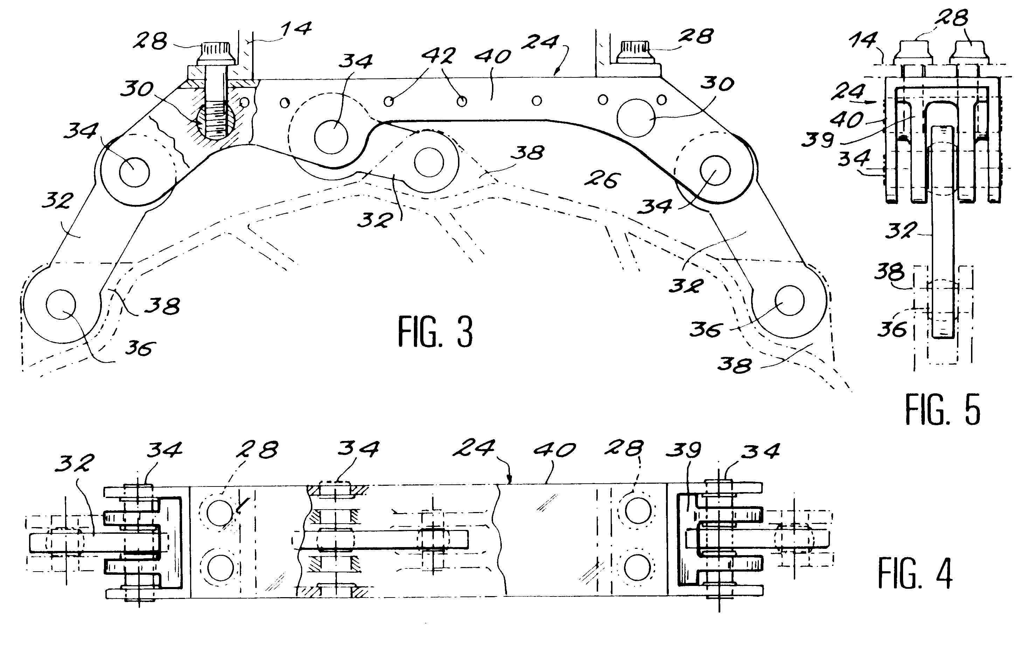

La structure de suspension arrière 18, qui fait l'objet de la présente invention, comporte comme l'illustre plus précisément la figure 2 une structure d'accrochage 24 constituée par une ferrure, sensiblement en arc de cercle. Cette ferrure 24 est située dans un plan sensiblement transversal par rapport à l'axe longitudinal du turboréacteur 10 et chevauche la partie supérieure de ce dernier, au-dessus du carter d'échappement 26. La ferrure 24 est fixée sous le mât 14 par des vis 28 qui sont en prise dans des axes de suspension horizontaux 30 traversant la ferrure.

Le carter d'échappement 26 est suspendu à la ferrure 24 par trois biellettes de suspension 32 auxquelles peut éventuellement être ajoutée une biellette de sécurité, conformément aux enseignements du document FR-A-2 599 708

De façon plus précise, l'extrémité supérieure de chacune des biellettes de suspension 32 est reliée à la ferrure 24 par un axe de suspension horizontal 34 qui traverse à la fois la ferrure et la biellette correspondantes. La suspension du carter d'échappement 26 aux extrémités inférieures des biellettes 32 est également assurée par des axes horizontaux 36 qui traversent à la fois les biellettes 32 et des oreilles ou chapes 38 (figure 3) réalisées d'un seul tenant avec le carter d'échappement 26, à l'extérieur de celui-ci.

Lorsque le turboréacteur est monté, les trois oreilles ou chapes 38 se trouvent situées, pour l'une d'entre elles, dans le plan vertical passant par l'axe longitudinal du turboréacteur et, pour les deux autres, en des emplacements symétriques par rapport à ce plan.

La structure d'accrochage conforme à l'invention va à présent être décrite plus en détail en se référant aux figures 3 à 5.

Conformément à l'invention, la ferrure 24 constituant la structure d'accrochage est formée de deux parties ou pièces 39 et 40 qui sont conçues et dimensionnées de façon à assurer, indépendamment l'une de l'autre, la reprise totale des efforts transmis entre le carter d'échappement 26 et le mât 14.

De façon plus précise, la ferrure comprend une partie intérieure 39, sensiblement en arc de cercle, et qui présente en section la forme d'un U renversé, ainsi qu'une partie extérieure 40, qui présente également sensiblement la forme d'un arc de cercle ainsi qu'une section en forme de U renversé. La partie intérieure 39 est ajustée dans la partie extérieure 40, de telle sorte que cette dernière chevauche la partie intérieure.

Afin que chacune des deux parties 38 et 40 puisse assurer indépendamment de l'autre la reprise des efforts, il est important de noter que chacun des axes de suspension 30 par lesquels la ferrure est fixée sous le mât 14 traverse à la fois la partie intérieure 39 et la partie extérieure 40 de la ferrure. De façon comparable, chacun des axes 34 par lesquels les biellettes de suspension 32 sont suspendues à la ferrure traverse à la fois la partie intérieure 39 et la partie extérieure 40 de cette dernière.

Comme l'illustrent notamment les figures 4 et 5, la ferrure est symétrique par rapport à un plan médian orienté perpendiculairement à l'axe longitudinal du turboréacteur. Par conséquent, chacun des axes de suspension 34 traverse la biellette 32 correspondante dans sa partie médiane ainsi que des flancs latéraux de chacune des parties 39 et 40 de la ferrure, de part et d'autre de cette partie médiane. Cet agencement permet d'assurer la transmission des efforts entre les biellettes 32 et la ferrure dans les meilleures conditions possibles lorsque l'une ou l'autre des deux parties 39 et 40 de la ferrure n'assure plus la reprise des efforts, sous l'effet de sa rupture.

De façon comparable, chacun des axes de suspension 30 traverse les flancs latéraux de chacune des parties 39 et 40 de la ferrure. Deux vis 28, d'axes verticaux, disposées symétriquement par rapport au plan médian précité, sont en prise dans chacun de ces axes 30 et traversent un trou formé dans chacune des parties 39 et 40, afin de suspendre la ferrure 24 au mât 14.

Comme l'illustrent notamment les figures 3 et 4, la partie intérieure 39 et la partie extérieure 40 de la ferrure de la structure d'accrochage selon l'invention sont en outre assujetties l'une à l'autre par des boulons 42, répartis sur toute la longueur de la ferrure, et qui traversent de part en part chacune des deux parties 39 et 40 parallèlement aux axes 30 et 34, c'est-à-dire parallèlement à l'axe longitudinal du turboréacteur.

Bien entendu, l'invention n'est pas limitée au mode de réalisation qui vient d'être décrit à titre d'exemple, mais en couvre toutes les variantes telles que revendiquées. Ainsi, et comme on l'a déjà mentionné, la structure d'accrochage selon l'invention peut être légèrement modifiée, de manière à pouvoir être reliée au turboréacteur par une quatrième biellette, dite de sécurité, normalement inactive lorsque les trois biellettes de suspension sont en état.

## Revendications

1. Structure d'accrochage arrière d'un turboréacteur à un mât (14) porté par un avion, comprenant une ferrure (24) prévue pour être fixée sous le mât par au moins deux premiers axes de suspension (30) et pour être reliée à des biellettes (32) de suspension du carter d'échappement (26) par au moins trois deuxièmes axes de suspension (34), la ferrure (24) comprenant au moins deux parties (39,40) traversées toutes deux par les premiers et deuxièmes axes de suspension (30,34), caractérisé par le fait que lesdites au moins deux parties (39,40) sont ajustées l'une dans l'autre, chacune desdites parties étant dimensionnées afin de pouvoir assurer en totalité la reprise des efforts transmis entre le carter (26) et le mât (14).

2. Structure selon la revendication 1, caractérisée par le fait que les deux parties (39,40) de la ferrure (24) sont reliées entre elles par des moyens d'assemblage (42).

3. Structure selon la revendication 2, caractérisée par le fait que les moyens d'assemblage sont des boulons (42) traversant les deux parties.

4. Structure selon l'une quelconque des revendications 1 à 3, caractérisée par le fait que les deux parties de la ferrure (24) comprennent une partie intérieure (39), à section en forme de U renversé, dans laquelle pénètrent les biellettes de suspension (32), et une partie extérieure (40), à section en forme de U renversé chevauchant la partie intérieure, les deuxièmes axes de suspension (34) transversant la partie intérieure et la partie extérieure de part et d'autre des biellettes de suspension.

## Claims

1. A rear connection structure between a turbojet engine and a pylon (14) of an aircraft, the structure comprising a mount (24) adapted to be secured below the pylon by at least two first suspension pins (30) and to be connected to suspension rods (32) of the exhaust casing (26) by at least three second suspension pins 34), the mount (24) comprising at least two parts (39, 40) through both of which the first and second suspension pins (30 34) extend, characterised in that the said at least two parts (39, 40) are disposed one in another and are each so dimensioned as individually to be able to take up all the forces transmitted between the casing (26) and the pylon (14).

2. A structure acc. to claim 1, characterised in that the two parts ((39, 40) of the mount (24) are interconnected by assembly means (42).

3. A structure according to claim 2, characterised in that the assembly means are bolts (42) which extend through the two parts.

4. A structure according to any of claims 1 to 3, characterised in that the two parts of the mount (24) comprise an inner inverted U-section part (39), into which the suspension rods (32) extend, and an outer inverted U-section part straddling the inner part, the second suspension pins (34) extending through the inner and outer parts on either side of the suspension rods.

## Patentansprüche

1. Vorrichtung zur hinteren Aufhangung eines Turbinentriebwerks an einem durch ein Flugzeug getragenen Stiel (14), aufweisend einen Verbinder (24), der so vorgesehen ist, daß ein unter dem Stiel über wenigstens zwei erste Aufhängungsachsen (30) befestigt ist und mit Aufhängungsarmen (32) des Auslaßgehäuses (26) über wenigstens drei zweite Aufhängungsachsen (34) verbunden ist, wobei der Verbinder (24) wenigstens zwei Teile (39, 40) aufweist, die beide durch die ersten und zweiten Aufhängungsachsen (30, 34) durchsetzt werden,
**dadurch gekennzeichnet,**
daß eines von den wenigstens zwei Teilen (39, 40) in das andere eingepaßt ist, wobei jedes der Teile so dimensioniert ist, daß es die gesamte Aufnahme der Kräfte gewährleisten kann, die zwischen dem Gehäuse (26) und dem Stiel (14) übertragen sind.

2. Vorrichtung nach Anspruch 1,
**dadurch gekennzeichnet,**
daß die beiden Teile (39, 40) des Verbinders (24) durch Montagemittel (42) miteinander verbunden sind.

3. Vorrichtung nach Anspruch 2,
**dadurch gekennzeichnet,**
daß die Montagemittel Bolzen (42) sind, die durch die beiden Teile hindurchgehen.

4. Vorrichtung nach einem der Ansprüche 1 bis 3,
**dadurch gekennzeichnet,**
daß die beiden Teile des Verbinders (24) ein Innenteil (39) mit dem Querschnitt eines umgedrehten U, in das die Aufhängungsarme (32) eindringen, und ein Außenteil (40) aufweisen mit dem Querschnitt eines umgedrehten U, das das Innenteil überlappt, wobei die zweiten Aufhängungsachsen (34) einerseits durch das Innenteil und das Außenteil und andererseits durch die Aufhängungsarme hindurchgehen.
